Europäisches Patentamt

European Patent Office

Office européen des brevets

(19)

(11) EP 0 845 486 A1

(12) EUROPEAN PATENT APPLICATION
published in accordance with Art. 158(3) EPC

(43) Date of publication:
03.06.1998 Bulletin 1998/23

(51) Int. Cl.[6]: C08G 59/34, C08L 63/00,
C09D 163/00, C09D 5/03,
C08F 8/08

(21) Application number: 97926245.8

(22) Date of filing: 13.06.1997

(86) International application number:
PCT/JP97/02051

(87) International publication number:
WO 97/48749 (24.12.1997 Gazette 1997/55)

(84) Designated Contracting States:
DE FR GB

(30) Priority: 17.06.1996 JP 177131/96
11.07.1996 JP 201331/96
13.12.1996 JP 352451/96
20.01.1997 JP 21085/97

(71) Applicant:
DAICEL CHEMICAL INDUSTRIES, LTD.
Sakai-shi, Osaka 590 (JP)

(72) Inventor: TAKAI, Hideyuki
Otake-shi, Hiroshima 739-06 (JP)

(74) Representative:
Portal, Gérard et al
Cabinet Beau de Loménie
158, rue de l'Université
75340 Paris Cédex 07 (FR)

(54) EPOXIDIZED POLYENE, EPOXY RESIN COMPOSITION AND PRODUCT OF CURING THEREOF, AND POWDER COATING MATERIAL

(57) The first invention relates to an epoxidized polyene having either epoxy groups alone or both epoxy groups and hydroxyl groups, characterized in that in the $^1$H-NMR spectrum, the sum of integrated values of signals within the range of 1-6 ppm that are assignable to hydrogen atoms on the carbon atoms to which epoxy groups or hydroxyl groups are bonded accounts for 15.5-20.0% of the total integrated value of all the proton signals. The epoxidized polyene of the invention has excellent compatibility with epoxy resins by virture of the presence of a specific amount of epoxy groups or a combination of epoxy and hydroxyl groups.

The second invention relates to an epoxy resin composition characterized by containing a mixture of 20-60% by weight of an epoxidized polyene which has an oxirane oxygen content of 6.5-13% by weight and which is prepared by epoxidizing a liquid poly-1,3-diene in which double bonds resulting from 1,4-linkages account for at least 50% of all double bonds and which liquid poly-1,3-diene has a number-average molecular weight of 1,000-30,000 and 80-40% by weight of an epoxy resin other than epoxidized polyenes (the total amount of both being 100% by weight) and a phenol resin which serves as a curing agent. According to the invention, through incorporation of a specific epoxidized polyene, a bisphenol-type epoxy resin, and a curing agent into the composition, a coating film having excellent impact resistance and bend resistance can be formed on metallic surfaces, etc.

The third invention relates to a composition comprising diepoxidized dicyclopentadiene and a compound having two or more carboxyl groups in the molecule. This compound has excellent chemical resistance, corrosion resistance, heat resistance, and weather resistance, as well as remarkable gloss, etc.; is useful in the production of powder coating materials; and does not irritate the skin during use.

EP 0 845 486 A1

**Description**

TECHNICAL FIELD

The present invention relates to epoxidized polyenes which have certain amounts of either epoxy groups or a combination of epoxy groups and hydroxyl groups in the molecular chain, and which have excellent compatibility with epoxy resins and other resins.

The present invention also relates to epoxy resin compositions which are useful as coatings, paints, adhesives, etc., as well as to cured epoxy resin products capable of forming on metallic surfaces or the like a cured coating film having excellent impact resistance and bending resistance.

The present invention further relates to compositions which comprise diepoxidized dicyclopentadiene (E-DCPD) and a carboxy-containing compound, as well as to powder coating materials obtainable from the compositions and exhibiting excellent weather resistance and gloss, while providing no irritation to the skin during use.

BACKGROUND ART

Epoxidized polyenes such as epoxidized polybutadienes and epoxidized polyisoprenes are frequently used, among other applications, as modifiers of other resins, adhesives, and paints. When these compounds are used solely, the resultant products sometimes have poor weather and heat resistance. For this reason, in many cases, epoxidized polyenes are used after they are mixed with or reacted with other resins.

Among epoxidized polyenes, epoxidized polybutadienes are often used in the form of mixtures with phenol resins from the viewpoint of compatibility. For example, Japanese Patent Application Laid-Open (*kokai*) Nos. 54-57592, 60-65013, 60-86134 disclose examples in which epoxidized polybutadienes, after being mixed with phenol resins, are used as flexibility-imparting agents or moldability-improving agents. Moreover, Japanese Patent Application Laid-Open (*kokai*) Nos. 2-92916 and 3-66769 disclose examples in which epoxidized polybutadienes are used in the form of mixtures with phenol resins for use as paint. It is also noted that epoxydized polybutadienes are often used in the form of mixtures with bisphenol A- or F-type epoxy resins. For example, Japanese Patent Application Laid-Open (*kokai*) Nos. 62-4755 and 62-129363 disclose uses as paints for cans and aqueous paints, respectively.

These publications describe that, in the case in which epoxydized polyene is used in the form of mixtures with other resins, satisfactory products can be obtained if the iodine value, number average molecular weight, internal structure, terminal groups of polybutadiene before undergoing epoxidation, as well as the number average molecular weight of the resultant epoxidized polybutadiene and the number of epoxy groups respectively fall within specified ranges defined in the above publications. However, as found from the research conducted by the present inventors, limitations to these factors alone do not provide satisfactory compatibility. On the other hand, there is a known method of increasing the degree of epoxidation for improving compatibility with other epoxy resins. This method, however, raises problems in practice due to the unstable nature of highly epoxidized products. Thus, there is need to develop epoxydized polyene which exhibits excellent compatibility when used in the form of mixtures with other resins (base resins) including epoxy resins, and which does not cause reduction in physicochemical properties inherent to the base resins.

Epoxidized polyenes typified by epoxidized polybutadienes have potential uses in wide fields, as their rubber elasticity is expected to impart flexibility to cured products. However, since they are poorly compatible with bisphenol-type or novolak-type epoxy resins, the amount used is limited. Therefore, unless they are reacted with other resins of interest prior to reaction with a setting agent, there may be caused phase separation, resulting in poor appearance and lack of expected physicochemical properties of the cured product. This means that extra preliminary reaction operations are needed, which hamper improvement in work efficiency. In view of the foregoing, there is still need for development of epoxy resin compositions and cured products thereof having the following features: compatibility with other epoxy resins; ability to impart flexibility to cured epoxy resin products; and proper hardness and impact resistance.

Powder coating materials, different from ordinary paints, do not contain volatile dispersing agents, and thus have the following characteristic features: they do not involve the risk of catching fire; residual solvents do not affect the performance of coating films adversely; a single coating operation is enough to provide a thick coating film; and material loss is quite small. Of all powder coating materials, epoxy-type powder coating materials, due to their excellent adhesion to metal, excellent resistance to chemicals, corrosion resistance, heat resistance, weather resistance, remarkable gloss, etc., are used as primers in the automobile industry, in addition to applications to the interior surfaces of apparatuses in the chemical industry, as electric wire coatings, and to outer surfaces of steel pipes that are installed underground. Examples of epoxy resins used as powder coating materials include bisphenol A-type epoxy resins and cresol novolak-type epoxy resins. Especially in European countries, trisglycidyl isocyanurate (hereinafter referred to as "TGIC") is widely used as a starting material of powder coating compositions due to its excellent feature—including good appearance of the coating film—and well-balanced coating characteristic—including corrosion resistance, weather resistance, and surface smoothness.

However, since TGIC irritates the skin during use, it is difficult to use in ordinary situations. Moreover, as the development of powder coating materials advances, higher levels of heat resistance and weather resistance have come to be demanded, and there are cases in which conventional epoxy resins cannot satisfactorily meet the demands. Under these circumstances, there is strong need for the development of powder coating materials which ensure excellent appearance of coating, remarkable properties of coating films—including corrosion resistance and weather resistance—and which do not raise skin-irritation or other problems during use.

DISCLOSURE OF THE INVENTION

In an attempt to provide epoxidized polyenes having excellent compatibility with other epoxy resins, the inventors of the present invention obtained more than ten types of commercially available liquid polybutadienes which differ from one another in terms of molecular weight, internal structure, and terminal functional groups, and carried out extensive research on epoxydization of polybutadienes and compatibility of the epoxidized polybutadienes with other resins. As a result, they found that when an epoxidized polybutadiene having a terminal hydroxyl group is compared with an epoxidized polybutadiene having a terminal hydrogen, the former is found to be superior to the latter in terms of compatibility with epoxy resins, even when the two have the same oxirane oxygen content. The present invention was accomplished based on this finding.

Moreover, the present inventors studied epoxy resins extensively, and found that compositions containing a specified epoxydized polyene, another epoxy resin and a phenol resin resolve the problems accompanying the aforementioned conventional cured products of the epoxy resins, leading to completion of the invention.

Furthermore, the present inventors found that E-DCPD has no irritation to the skin, and that excellent powder coating materials can be obtained by use of a composition containing E-DCPD and a carboxy-containing compound.

According to a first aspect of the present invention, there is provided an epoxidized polyene having epoxy groups alone or a combination of epoxy groups and hydroxyl groups, characterized in that, in the $^1$H-NMR spectrum, the sum of integrated values of signals within the range of 1-6 ppm that are assignable to hydrogen atoms on the carbon atoms to which epoxy groups or hydroxyl groups are bonded (i.e., carbon atoms which form part of epoxy groups or carbon atoms which are linked with hydroxyl groups) accounts for 15.5-20.0% of the total integrated value of all the proton signals. There is also provided an epoxidized polyene as described above, characterized in that the epoxidized polyene is an epoxidized product of polybutadiene, polyisoprene, or of a copolymer of a compound having a butadiene or isoprene moiety in the molecule. There is further provided an epoxidized polyene as described above, characterized in that the epoxidized polyene is an epoxidized product of polybutadiene and has a molecular weight of 500-50,000. There is still further provided an epoxidized polyene as described above, characterized in that the internal structure of polyene which serves as a starting material of the epoxidized polyene is such that double bonds resulting from 1,4-linkages account for 50% or more of all double bonds. There is yet further provided an epoxidized polyene as described above, which is obtained through epoxidation of a starting material polyene by use of an organic peracid.

According to a second aspect of the present invention, there is provided an epoxy resin composition comprising a mixture of 20-60% by weight of an epoxidized polyene which has an oxirane oxygen content of 6.5-13% by weight and which is prepared by epoxidizing a liquid poly-1,3-diene in which double bonds resulting from 1,4-linkages account for at least 50% of all double bonds and which liquid poly-1,3-diene has a number-average molecular weight of 1,000-30,000 and 80-40% by weight of an epoxy resin other than epoxidized polyenes (the total amount of both being 100% by weight); and a phenol resin which serves as a curing agent. There is also provided an epoxy resin composition comprising a mixture of 20-60% by weight of an epoxidized polyene which has an oxirane oxygen content of 6.5-13% by weight and which is prepared by epoxidizing a liquid poly-1,3-diene in which double bonds resulting from 1,4-linkages account for at least 50% of all double bonds and which liquid poly-1,3-diene has a number-average molecular weight of 1,000-30,000 and 80-40% by weight of an epoxy resin other than epoxidized polyenes (the total amount of both being 100% by weight), a phenol resin which serves as a curing agent, and a curing catalyst. There is further provided an epoxy resin composition as described above, in which the epoxy resin other than epoxidized polyenes is at least one member selected from among bisphenol type epoxy resins such as bisphenol A- and F-type epoxy resins. There is still further provided an epoxy resin composition as described above, characterized in that the epoxidized polyene is prepared by epoxidizing the carbon-carbon double bonds of the liquid poly-1,3-diene through use of an organic peracid. There is yet further provided a cured product of an epoxy resin composition as described above, characterized in that the epoxy resin composition is cured by the application of heat.

According to a third aspect of the present invention, there is provided a composition comprising E-DCPD and a compound having two or more carboxyl groups in the molecule. There is also provided a composition as described above, wherein the compound having two or more carboxyl groups in the molecule is represented by $R(COOH)_n$ wherein R, having a valence of n, is a linear or branched C2-C25 aliphatic hydrocarbon group, aromatic hydrocarbon group, alicyclic hydrocarbon group, or heterocycle-containing group, and n is an integer between 2 and 5 inclusive. There is also provided a composition containing E-DCPD and a carboxy-containing polyester resin. There is further provided a composition as described above, characterized in that the carboxy-containing polyester resin has an acid value of 15-200 mgKOH/g, a softening point of 70-160°C, and a number-average molecular weight of 200-20,000. There is still further provided a composition as described above, characterized in that the equivalent ratio of epoxy groups to carboxyl groups; i.e., EPOXY/-COOH, is 0.5-2.0. In addition, there is provided a powder coating material containing a composition described above. The present invention will next be described in detail.

BEST MODE FOR CARRYING OUT THE INVENTION

The first mode of the present invention will now be described.

The expression "epoxidized polyene" as used herein refers to an epoxidized poly-1,3-diene such as polybutadiene and polyisoprene, or to an epoxidized copolymer having a butadiene moiety or an isoprene moiety. Examples of epoxidized polyenes include epoxidized polybutadiene, epoxidized polyisoprene, epoxidized co-polyene having a butadiene moiety, and epoxidized co-polyene having an isoprene moiety. The number average molecular weight of the epoxidized polyene is preferably 500-50,000, more preferably 1,000-5,000. When the molecular weight is in excess of 50,000, epoxidized products may not be liquefied and may cause poor work efficiency, whereas when it is less than 500, epoxidized products may not serve as satisfactory flexibility-imparting agents.

The internal structure of a polyene as a starting material of an epoxidized polyene is preferably such that double bonds resulting from 1,4-linkages account for at least 50% of all double bonds. 1,2-Double bonds are not preferred in that they are difficult to epoxidize, whereas 1,4-linkages are preferred from the viewpoints of easy epoxidization and excellent compatibility with bisphenol A-or F-type epoxy resins. Although the *cis*-type and *trans*-type polyene structures are acceptable, the polyene preferably has a terminal hydrogen or a terminal hydroxyl group.

Epoxidation of a polyene may be performed by use of a conventional method. Examples of the method include (1) heating a starting material polyene in combination with an epoxidizing agent, and (2) heating a raw polyene in combination with a compound which can serve as an epoxidizing agent in the reaction system.

Examples of the "epoxidizing agent" mentioned in (1) include organic peracids such as peracetic acid, performic acid, perbenzoic acid, trifluoroperacetic acid, and perpropionic acid; hydrogen peroxide; and organic hydroperoxides such as t-butyl hydroperoxide, cumene hydroperoxide, etc. In the present invention, organic peracids are preferably used. Moreover, organic peracids substantially containing no water are preferred in view of yielding an increased oxirane oxygen content. Of the listed organic peracids, peracetic acid is particularly preferred in that it is obtainable industrially and economically, and has high stability. The amount of the epoxidizing agent, which is not strictly limited, is determined in accordance with the identity of the epoxidizing agent, desired degree of epoxidation, and the polyene to be epoxidized. Examples of the "compound which can serve as an epoxidizing agent in the reaction system" mentioned in (2) include combinations of a carboxylic acid—such as formic acid, acetic acid, and propionic acid—and hydrogen peroxide.

A catalyst may be used in epoxydation. An alkali such as sodium carbonate and an acid such as sulfuric acid may be used as a catalyst, in the case in which an organic peracid is used as an epoxidizing agent. In the case in which a hydroperoxide type is used as an epoxidizing agent, a mixture of tangustic acid and sodium hydroxide, or an organic acid may be used as a catalyst for hydrogen peroxide, and molybdenum hexacarbonyl may be used as a catalyst for t-butyl hydroperoxide.

An inert solvent may be used in order to reduce the viscosity of starting materials and stabilize the epoxidizing agent through dilution therewith. For example, when peracetic acid is used as an epoxidizing agent, there may be used aromatic compounds such as benzene and xylene; ethers; esters such as ethyl acetate; and halohydrocarbons such as chloroform and tetrachlorocarbon. Examples of solvents which are particularly preferred include hexane, heptane, cyclohexane, toluene, benzene, ethyl acetate, tetrachlorocarbon, and chloroform.

Reaction temperature of epoxidation may be suitably determined in accordance with the epoxidizing agent. When peracetic acid is used as an epoxidizing agent, the reaction temperature is preferably 20-80°C, more preferably 30-60°C. When the reaction temperature is less than 20°C, the reaction rate is low and thus impractical. On the other hand, when the temperature is higher than 80°C, significant self-decomposition of peroxide occurs, which is not preferred. In the case in which a t-butyl hydroperoxide (which is a hydroperoxide)/molyodenum dioxide diacetylacetonate system is used as an epoxidizing agent, the reaction temperature is preferably 20-150°C. Similar to the case of peracetic acid, reaction temperatures lower than 20°C result in low reaction rates, whereas when they are higher than 150°C, significant self-decomposition of the epoxidizing agent occurs.

Although atmospheric pressure suffices for epoxidation, the reaction pressure may also be slightly reduced or increased.

The molar ratio of an epoxidizing agent feedstock to a polyene may be suitably determined in accordance with the target degree of epoxidation. In the present invention, the epoxidizing agent is preferably added in an amount of 1-2 mol to 1 mol of unsaturated groups contained in the polyene, so as to achieve satisfactory epoxidation. Addition of the epoxidizing agent in amounts of more than 2 mol is economically disadvantageous and may cause unfavorable side reactions. More specifically, when the epoxidizing agent is peracetic acid, its amount is preferably 1-1.5 mol.

Although the aging time after termination of the addition of epoxidizing agent may be suitably determined in accordance with the reaction rate, it is typically about 1-5 hours. An aging time of less than 1 hour provides low conversion rates of double bonds and is impractical, whereas an aging time in excess of 5 hours is accompanied by extensive occurrence of an addition reaction between epoxides and acetic acid when peracetic acid is used as a peroxide, undesirably resulting in reduced yields and increased viscosity of products.

The thus-obtained epoxidized polyene may be isolated by use of suitable customary methods. Examples thereof include precipitation with a poor solvent, introduction of a polymer in hot water under agitation to evaporate the solvent, and a so-called direct solvent removal method.

The epoxidized polyene of the present invention has an epoxy group in the molecule and may have a hydroxyl group. The hydroxyl group may originate from polyene or may be formed during epoxidation of polyene.

The epoxidized polyene of the present invention is preferably such that, in the $^1$H-NMR spectrum, the sum (which will be referred to as (B)) of integrated values of signals within the range of 1-6 ppm that are assignable to hydrogen atoms on the carbon atoms to which epoxy groups are bonded—or, in the case in which hydroxyl groups are added, the hydroxyl groups are bonded—is preferably 15.5-20.0%, particularly preferably 17.0-20.0%, of the total integrated value (which value will be referred to (A)) of all proton signals. If the ratio of (B) to (A) is in excess of 20.0%, stability of products is low and impractical and thus not satisfactory, whereas ratios less than 15.5% undesirably result in low compatibility with other epoxy resins. Therefore, so long as the above-mentioned sum of integrated values in the $^1$H-NMR spectrum of hydrogen atoms on the carbon atoms to which are attached both hydroxyl groups and epoxy groups—which are polar functional groups—or to which are attached only epoxy groups fall within the above range, excellent compatibility to other epoxy resins is obtained.

In the epoxidized polyenes of the present invention, if they have the same oxirane oxygen content, hydroxyl-terminated epoxidized polybutadienes have superior compatibility with other epoxy resins as compared with hydrogen-terminated epoxidized polybutadienes.

In the present invention, calculation of the integrated values was performed as described below.

(1) Generally speaking, epoxidized polyene shows peaks attributed to functional groups at positions shown in Table-1. Accordingly, the total integrated value (A) of all proton signals in the $^1$H-NMR spectrum was calculated by assuming the total of the integrated values of the below-described ranges is 100%.

(2) In the $^1$H-NMR spectrum, the sum (B) of integrated values of signals within the range of 1-6 ppm that are assignable to hydrogen atoms on the carbon atoms to which hydroxyl groups or epoxy groups are bonded was obtained by the summation of the integrated values of peak intensities attributed to b, f, and g.

(3) In polybutadiene in which double bonds resulting from 1,4-linkages account for at least 50%, the double bonds are predominantly epoxidized and 1,2-double bonds are scarcely epoxidized. Therefore, the peak attributed to "6. Hydrogen atoms on carbon atoms of oxirane rings by epoxidizing double bonds resulting from 1,2-linkages" (e) was excluded from the calculation of the integrated value (B).

(4) The integrated value of hydrogen atoms added to the carbon atoms having hydroxyl groups is represented by the integrated value of the Peak intensity signal of "3. Hydrogen atoms linked to hydroxyl-attached carbon" (b).

TABLE-1

| | FUNCTIONAL GROUP | MOIETY*[1] | CHEMICAL SHIFT (ppm) |
|---|---|---|---|
| 1 | Hydrogen atoms of double bonds from 1,4-linkages | d | 5.2 - 5.8 |
| 2 | Hydrogen atoms of double bonds from 1,2-linkages | c | 4.8 - 5.2 |
| 3 | Hydrogen atoms linked to hydroxyl-attached carbon | b | 3.1 - 4.8 |
| 4 | Hydrogen atoms on carbon atoms of oxirane rings by epoxidizing cis double bonds from 1,4-linkages | g | 2.8 - 3.1 |
| 5 | Hydrogen atoms on carbon atoms of oxirane rings by epoxidizing trans double bonds from 1,4-linkages | f | 2.5 - 2.8 |
| 6 | Hydrogen atoms on carbon atoms of oxirane rings by epoxidizing double bonds from 1,2-linkages | e | 2.0 - 2.4 |
| 7 | Other hydrogen atoms | a | 1.0 - 2.4 |

[Note] *1:  Moieties of epoxidized polybutadiene are classified into the following a to g.

a          b          c          d

e          f          g

The epoxidized polyene in the first aspect of the present invention has excellent compatibility with other epoxy resins, enhances physochemical properties of such other resins which serve as base resins, and extends use of the resins. Examples of conventionally known resins having good compatibility with the epoxidized polyene of the present invention include a bisphenol A-type epoxy resin, a bisphenol F-type epoxy resin, a hydrogenated bisphenol A-type epoxy resin, a hydrogenated bisphenol F-type epoxy resin, a cresol novolak-type epoxy resin, and a phenol novolak-type epoxy resin. The epoxidized polyene of the present invention is useful as coating materials, including electrocoating materials and aqueous coating materials, adhesives, photo-curable resins, laminated sheets, and additives for modifying resins.

The second aspect of the present invention is described below.

The epoxidized polyenes which may be used in the present invention are those obtained by epoxidizing the carbon-carbon double bonds of liquid poly-1,3-dienes such as polybutadiene and polyisoprene, through use of hydrogen peroxide or a peracid such as performic acid or peracetic acid.

The amount of internal double bonds resulting from 1,4-linkages of the liquid poly-1,3-diene preferably accounts for 50% or more of all double bonds. When the amount of internal double bonds resulting from 1,4-linkages accounts for less than 50%, the primary chain after epoxidation has low polarity to cause poor compatibility with other resins. Therefore, cured products may become opaque and, in cases in which improvement in impact resistance or other properties is sought, flexibility is difficult to impart. The number-average molecular weight of the liquid poly-1,3-diene is preferably 1,000-30,000, more preferably 1,000-5,000. When the molecular weight is less than 1,000, satisfactory flexibility cannot be imparted to cured epoxy resins, whereas when it is in excess of 30,000, viscosity increases. The increase in viscosity after epoxidation induces poor fluidity and makes handling difficult. Preferably, the liquid poly-1,3-diene is such that 50% or more of the double bonds in the molecule are contained in the primary chain, and such that it maintains a liquid state at ambient temperature. Although the liquid poly-1,3-diene is terminated with hydrogen or a hydroxyl group, a hydrogen-terminated polyene is preferred. A hydroxyl-terminated polyene provides a viscosity higher than that of a hydrogen-terminated polyene. Examples of commercially available liquid poly-1,3-dienes which may be used in the present invention include "R-15HT" (1,4-linkage content 80%, number-average molecular weight 2400) and "R-45HT" (1,4-linkage content 80%, number-average molecular weight 5000) which are manufactured by Idemitsu Petrochemical Co., Ltd.; and "Polyoil-110" (1,4-linkage content 99%, number-average molecular weight 3400) and "Polyoil-130" (1,4-linkage content 99%, number-average molecular weight 5200) which are manufactured by Nippon Zeon Co., Ltd.

The liquid poly-1,3-diene may be epoxidized under the same epoxidation condition—epoxidizing agent, solvent, reaction temperature, reaction pressure, feed-stock quantity, reaction time, and isolation method—as those described in connection with the first aspect of the invention.

The oxirane oxygen content of the epoxidized polyene used in the present invention is preferably 6.5-13% by weight, more preferably 7.5-12% by weight. When the oxirane oxygen content is less than 6.5% by weight, the polarity of the polyene molecule becomes low to induce low compatibility, whereas epoxidized polyene having an oxirane oxygen content of 13% by weight or more has increased viscosity due to high epoxidation degree and poor operation efficiency. In addition, stability of epoxy resins may be lost as a result of ring-opening of epoxy groups or concomitant gelation.

Examples of epoxy resins which may be used in the present invention other than the epoxidized polyenes include bisphenol-type epoxy resins such as bisphenol A-type epoxy resins, hydrogenated bisphenol A-type epoxy resins, and bisphenol F-type epoxy resins. Examples of bisphenol A-type epoxy resins include "Epicoat 1001," "Epicoat 1004," and "Epicote 1009" which are manufactured by Yuka Shell Co., Ltd. and "Epichlon 7050" and "Epichlon 9055" which are manufactured by Dainippon Ink and Chemicals, Inc.

Preferably, the blend ratio of epoxidized polyene and epoxy resin(s) other than the epoxidized polyene—which constitute the epoxy resin composition of the present invention—is such that the epoxidized polyene is contained in an amount of 20-60% by weight and the epoxy resins other than the epoxidized polyene are contained in an amount of 40-80% by weight, and their total amount is 100% by weight. When the epoxidized polyene content is less than 20% by weight, flexibility is not sufficiently imparted, whereas when it is in excess of 60% by weight flexibility is difficult to impart on account of excessive increase of cross-linking density. Thus, taking as an example of the case in which there are used epoxidized polyene of the present invention and a bisphenol-type epoxy resin which is preferred as an epoxy resin other than the epoxidized polyene, the blend ratio of the epoxidized polyene to the bisphenol-type epoxy resin is 0.4-1.1, preferably 0.5-1.0, expressed as the ratio of the bisphenolic OH equivalent to the epoxy equivalent of the epoxidized polyene. Use in these ranges is advantageous, because proper hardness can be obtained.

In the epoxy resin composition of the present invention, a phenolic resin is used as a curing agent. Examples of preferred phenolic resins include phenolic resins such as novolak-type and resol-type phenolic resins. Commercially available phenolic resins such as "PS-2980" and "PS-4900" (Gun Ei Chemical Industry Co., Ltd.) may be used. A curing agent is used in such an amount that corresponds to an OH equivalent of the phenolic resin with respect to the total epoxy equivalent of epoxidized polyene and epoxy resins other than the epoxidized polyene of 0.4-1.1, preferably 0.5-1.0.

The epoxy resin composition of the present invention is ultimately manufactured through dissolving in an organic solvent the constitutional components, i.e., an epoxidized polyene, an epoxy resin other than the epoxidized polyene such as a bisphenol-type epoxy resin, and a curing agent. Examples of solvents which may be used include ketones such as acetone, methyl ethyl ketone, and cyclohexanone; aromatics such as toluene and xylene; esters such as ethyl acetate and butyl acetate; alcohols such as isopropyl alcohol and butyl alcohol; cellosolves such as ethyl cellosolve and methyl cellosolve; and glycol acetates such as ethylene diglycol acetate.

The epoxy resin composition of the present invention may contain a curing catalyst for accelerating curing. Examples of curing catalysts include metal alkoxides such as aluminum isopropoxide and tetrabutoxy titanate; aluminum acetyl acetonates; phosphoric acid; phosphate esters; and imidazoles such as 2-ethyl-4-methylimidazole and 4-methylimidzaole. These may be used singly or in combination. The curing catalyst may be used in an amount of typically 0.1-10 parts by weight, preferably 0.5-5 parts by weight, based on 100 parts by weight of resin solid contents.

Conventionally known other additives such as dyes and pigments for coloring, corrosion-inhibiting pigments, fillers, surfactants, and lubricants may be added to the epoxy resin composition of the present invention.

Conventional coating means such as bar-coaters, sprays, roll-coating, brush-coating, and flow coating may be applied to the epoxy resin composition of the present invention. In order to obtain a cured product of an epoxy resin composition of the present invention, the epoxy resin composition is heated to 150-250°C. The curing typically requires 1-20 minutes and may be terminated at 200°C for 10 minutes in the presence of a curing catalyst. The epoxy resin composition of the present invention may be used as a coating material applied on metallic surfaces, wood products, rubber, and plastics; a paint; an adhesive; a printed circuit board; a laminated sheet, and as an electrically insulating material.

The third aspect of the present invention is described below.

The "E-DCPD" which is used in the present invention is obtained through epoxidation of two double bonds possessed by the dicyclopentadiene (DCPD) molecule. DCPD which may be used as a starting material in the present invention is commercially available, and so long as 90% by weight or higher purity is secured, impurities such as pentadiene, cyclopentadiene, their derivatives, and derivatives of DCPD may be contained.

E-DCPD may be prepared through epoxidation of DCPD. Epoxidation may be performed as described in connection with the first aspect of the invention. The following is an exemplary method of epoxidation.

As examples of epoxidizing agents applied to DCPD, there may be used percarboxylic acids such as performic acid, peracetic acid, and perpropionic acid. Examples of solvents for percarboxylic acids include hydrocarbons such as hexane, organic acid esters such as ethyl acetate, and aromatic hydrocarbons such as toluene. When anhydrous percarboxylic acids are used as epoxidizing agents, addition of an alkali metal salt of weak acid to the reaction system prior to reaction is effective for preventing self-decomposition reaction of percarboxylic acids and for preventing increase of the acid value. Examples of alkali metals which may be used include lithium, sodium, and potassium. Examples of weak acids include mineral acids and organic acids having 3 or higher pK values (logarithm of the inverse number of the dissociation constant). Examples of mineral acids include phosphoric acid, polyphosphoric acid, and carbonic acid. Examples of organic acids include monohydric aliphatic acids such as acetic acid, propionic acid, and stearic acid; polyvalent aliphatic acids such as malonic acid and citric acid; and aliphatic acids having an intramolecular unsaturated linkages such as crotonic acid and oleic acid. There may be used many alkali metal salts of weak acid which are obtained from combinations of the aforementioned alkali metals and weak acids. Particularly preferred are sodium polyphosphate, potassium polyphosphate, sodium carbonate, sodium acetate, potassium acetate, sodium propionate, and potassium propionate. If impurities such as strong acids, metal ions, etc. are present in the percarboxylic acid solution, the amount of alkali metal salts may be increased in accordance with the identity and the amount of the impurities. In the present invention, the alkali metal salt is preferably used in an amount of 0.005-5.0% by weight, more preferably 0.01-1.0% by weight, with respect to the amount of the percarboxylic acid (pure content). Amounts less than 0.005% by weight result in poor effect to prevent self-decomposition of percarboxylic acid, to thereby reduce selectivity of percarboxylic acid, whereas use in excess of 5.0% by weight is wasteful, as it does no longer provide appreciable improvement in self-decomposition preventing effect. The alkali metals salts may be used in either a homogeneous system or a heterogeneous system.

The equivalent ratio of percarboxylic acid (pure content) to double bonds of DCPD, i.e., (PERCARBOXYLIC ACID)/(DOUBLE BONDS), is preferably 1.0-2.0, particularly preferably 1.1-1.3, so as to achieve a sufficient epoxidation reaction.

In epoxidation reaction in order to stabilize the oxidizing agents through dilution,, there may be used solvents including aromatic compounds such as benzene, toluene, and xylene; halides such as chloroform, dimethylchloride, carbon teterachloride, and chlorobenzene; ester compounds such as ethyl acetate and butyl acetate; ketone compounds such as acetone and methyl isobutyl ketone; and ether compounds such as 1,2-dimethoxyethane. Reaction temperature is preferably 20-80°, more preferably 30-60°C. Reaction temperatures lower than 20°C are not practical because the reaction rate is too small, whereas temperatures higher than 80°C are not preferred because significant self-decomposition of percarboxylic acid is caused. Reaction pressure may be slightly reduced or increased, so far as the solvent composition and reaction temperature are not affected. Although the aging time after percarboxylic acid and the epoxidizing agent are charged varies in accordance with the reaction rate, it is typically 1-2 hours. When the aging time is less than 1 hour, conversion rates of DCPD is impractically low. On the other hand, when the aging time is longer than 2 hours, in the case in which peracetic acid, for example, is used as a percarboxylic acid, addition reaction between

EP 0 845 486 A1

E-DCPD and acetic acid increases, causing reduction in yields.

The thus-obtained crude reaction mixture contains reaction by-products, a carboxylic acid such as acetic acid, and solvents, in addition to the target E-DCPD. Therefore, in order to prevent ring-openeing of epoxy rings of the resultant product, the crude reaction mixture is preferably neutralized and washed with water, so as to remove low-boiling point components. Examples of aqueous alkali solutions for neutralization include aqueous solutions of NaOH, KOH, $K_2CO_3$, $Na_2CO_3$, $NaHCO_3$, $KHCO_3$, and $NH_3$. Low-boiling point components are removed from the crude reaction mixture through use of a thin film forming evaporator.

Next, the "compound having two or more carboxyl groups in the molecule" which is used in the present invention is described below. The compound having two or more carboxyl groups in the molecule which may be used in the present invention is not particularly limited. Preferably, it is represented by $R(COOH)_n$, wherein R, having a valence of n, is a linear or branched C2-C25 aliphatic hydrocarbon group, aromatic hydrocarbon group, alicyclic hydrocarbon group, or a heterocycle-containing group, and n is an integer between 2 and 5 inclusive. Specifically, mention may be given of aliphatic dicarboxylic acids such as succinic acid, adipic acid, pimelic acid, suberic acid, azelaic acid, sebacic acid, decanedicarboxylic acid, and brassylic acid; alicyclic dicarboxylic acids such as tetrahydrophthalic acid, methyltetrahydrophthalic acid, hexahydrophthalic acid, methylhexahydrophthalic acid, and nadic acid; alicyclic polycarboxylic acids such as methylcyclohexanetetracarboxylic acid; aromatic dicarboxylic acids such as phthalic acid; aromatic polycarboxylic acids such as trimellitic acid, pyromellitic scid, and benzophenone tetracarboxylic acid; and heterocyclic polycarboxylic acids such as triscarboxyethyl isocyanurate. As other classes of compounds having two or more carboxyl groups in the molecule which may be used in the present invention, mention may be given of hydroxy-containing polycarboxylic acids such as ethyleneglycol bis(trimellitate) and glycol tris(trimellitate); other carboxylic acids such as alkenyl succinic acid, and dimer acids.

The "carboxy-containing polyester resin" which is used in the present invention preferably has a carboxylic group at a molecular end. The acid value is preferably 15-200 mgKOH/g. Acid values of less than 15 mgKOH/g invite reduction of cross-linking points and may cause poor solvent resistance. On the other hand, acid values in excess of 200 mgKOH/g may result in poor impact resistance. The softening point preferably falls within the temperature range of 70-160°C, more preferably 100-130°C. If the softening point is lower than 70°C, blocking may occur during storage, whereas if it is higher than 160°C, fluidity required for a powder coating material decreases. The number-average molecular weight is 200-20,000, preferably 250-5,000. With the number-average molecular weight falling within these ranges, the resultant powder coating materials have suitable fluidity. The moiety of the carboxyl-containing polyester resin may be branched or linear, but preferably rather linear with reduced amounts of branching points in consideration of fluidity of the resultant coating material when it is in a molten state, and appearance and gloss of the coating film obtained after baking.

No particular limitation is imposed on the method of preparing carboxyl-containing polyester resins. They may be prepared from polycarboxylic acids, and diols, triols, or other polyhydric alcohols, through use of known esterification catalysts. Examples of polycarboxylic acids which may be used in the present invention include aromatic polycarboxylic acids (such as terephthalic acid, isophthalic acid, phthalic acid, methylterephthalic acid, trimellitic acid, and pyromellitic acid) and their anhydrides and alkyl esters; aliphatic polycarboxylic acids (such as adipic acid, sebacic acid, succinic acid, maleic acid, and fumaric acid) and their anhydrides and alkyl esters; alicyclic polycarboxylic acids (such as tetrahydrophthalic acid, methyltetrahydrophthalic acid, hexahydrophthalic acid, and methylhexahydrophthalic acid) and their anhydrides and alkyl esters. Examples of polyhydric alcohols which may be used include ethylene glycol, propylene glycol, 1,3-butanediol, 1,4-butanediol, 1,6-hexanediol, neopentyl glycol, bishydroxyethyl terephthalate, hydrogenated bisphenol A, ethylene oxide adducts of hydrogenated bisphenol A, propylene oxide adducts of hydrogenated bisphenol A, trimethylolpropane, trimethylolethane, glycerin, and pentaerythritol, and 2,2,4-trimethylpentane-1,3-diol. Monoepoxides such as α-olefin monoepoxides and CARDURA E (versatic acid monoglycidyl ether) may be used as other polymerization components. Cyclic lactones may also be used. Examples of such lactones include ε-caprolactone, 4-methylcaprolactone, 2-methylcaprolactone, δ-valerolactone, β-methyl-δ-valerolactone, β-propiolactone, and γ-butyrolactone. These may be used singly or in combination of two or more species.

The temperature at which esterification is performed is preferably 130-240°C, more preferably 140-230°C. Degradation of polyesters due to oxidation during the reaction and degradation of the resin color can be suppressed if the reaction is performed under a stream of an inert gas such as nitrogen. Esterification may be performed in the presence of an esterification catalyst. Examples of the catalyst include organic tin compounds such as tin octylate, dibutyltin oxide, dibutyltin laurate, and monobutyltinhydroxybutyltin oxide; tin compounds such as stannous oxide; tetrabutyl titanate; tetraethyl titanate; and tetrapropyl titanate. The amount of the catalyst is 0.1-1000 ppm, preferably 1-100 ppm. When the amount is in excess of 1000 ppm, considerable coloring of resin is induced and the stability of products is adversely affected. In contrast, when the amount of catalyst is less than 0.1 ppm, the polymerization rate becomes extremely low. Commercially available carboxy-containing polyester resins may also be used for the purpose of the present invention. Examples of such commercial products include "P-2400" (acid value 33 mgKOH/g), "P-3900" (acid value 35 mgKOH/g), and "P-4800" (acid value 38 mg/KOH/g) manufactured by Ciba-Geigy; and "GV-340" (acid value 32 mgKOH/g, softening point (ring and ball test) 126°C) manufactured by Japan U-Pika Co., Ltd.

One of a "compound containing two or more carboxyl groups in the molecule" and a "carboxy-containing polyester resin," or both as a mixture, may be used in the composition of the present invention.

The equivalent ratio (EPOXY/-COOH) of epoxy groups (EPOXY) to carboxyl groups (-COOH) in the composition of the present invention is preferably 0.5-2.0, particularly preferably 0.7-1.4. When the ratio is less than 0.5 or in excess of 2.0, the curing rate becomes extremely low and the cured coating film does not exhibit satisfactory characteristics.

The composition of the present invention may optionally contain additives such as (1) pigments; (2) fluidity regulators such as silicon compounds and 2-ethylhexyl acrylate polymers; (3) amines such as tertiary amine compounds and quaternary ammonium compounds; and (4) phosphorus-containing curing catalysts such as triphenylphosphine and phosphonium salts.

The composition of the present invention may be processed into a powder coating material through kneading of a compound containing two or more carboxyl groups in the molecule and/or a carboxy-containing polyester resin; E-DCPD; and optional other additives such as pigments and silicon compounds by use of an extruder, etc., followed by crushing and classifying. The powder coating material formed of the composition of the present invention may be applied to metallic surfaces of furniture, steel-made shelves, etc.; inner surfaces of apparatuses for chemical industry use; electric cable coatings; outer surfaces of underground-installed steel tubes; and automobile top coatings. In addition to powder coating materials, the composition of the present invention is also useful as polymer stabilizers, pressure-sensitive adhesives, coating materials, and sealant resins. When the powder coating material of the present invention are applied, known methods such as electrostatic coating and fluidized dip coating may be used.

BRIEF DESCRIPTION OF DRAWINGS

Fig. 1 is a $^1$H-NMR chart of the epoxidized polybutadiene obtained in Example 1.
Fig. 2 is a $^1$H-NMR chart of the epoxidized polybutadiene obtained in Example 2.
Fig. 3 is a $^1$H-NMR chart of the epoxidized polybutadiene obtained in Example 3.
Fig. 4 is a $^1$H-NMR chart of the epoxidized polybutadiene obtained in Example 4.

EXAMPLES

The present invention will next be described by way of examples, which should not be construed as limiting the invention. In the below-described Examples, oxirane oxygen content was analyzed in accordance with ASTM-D1652 (hydrobromic acid method), and measurement of $^1$H-NMR of epoxidized polyene was performed by use of JNM-EX270 manufactured by JEOL Ltd.

[Example 1]

A 500-ml four-necked flask equipped with a stirrer, a reflux condenser, and a thermometer was charged with 200 g of polybutadiene having terminal hydrogen (number-average molecular weight = 1,600; the amount of 1,4-linkages = at least 96% of all double bonds; tradename "Polyoil-110," manufactured by Nippon Zeon Co., Ltd.) and 100 g of a solvent, ethyl acetate. The interior temperature of the flask was raised to 40°C, and a solution (583 g) of 29.0% peracetic acid in ethyl acetate was added dropwise over about three hours with stirring by use of a dropping funnel, to thereby induce an epoxidation reaction. The reaction mixture was aged for one hour at 40°C.

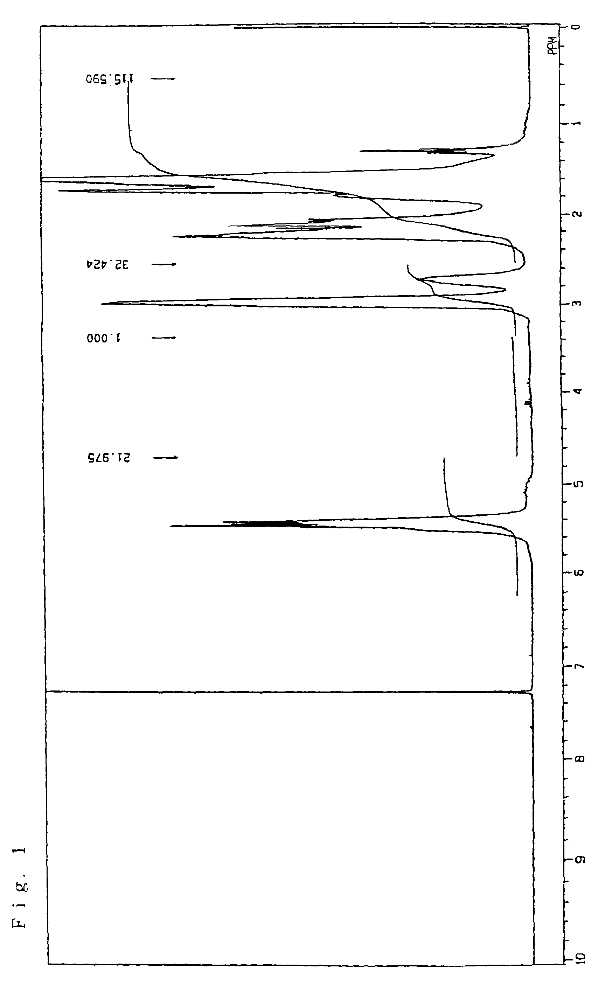

After completion of ageing, the reaction mixture was washed with water in twice an amount of polybutadiene (on a weight basis) three times, to thereby remove acetic acid originating from peracetic acid. Subsequently, volatile components such as small amounts of water and ethyl acetate were removed through concentration under reduced pressure. The resultant product was an epoxidized polybutadiene having an oxirane oxygen content of 10.6%. Physicochemical properties of the product are shown in Table-2. Also, the $^1$H-NMR chart is shown in Fig. 1.

[Example 2]

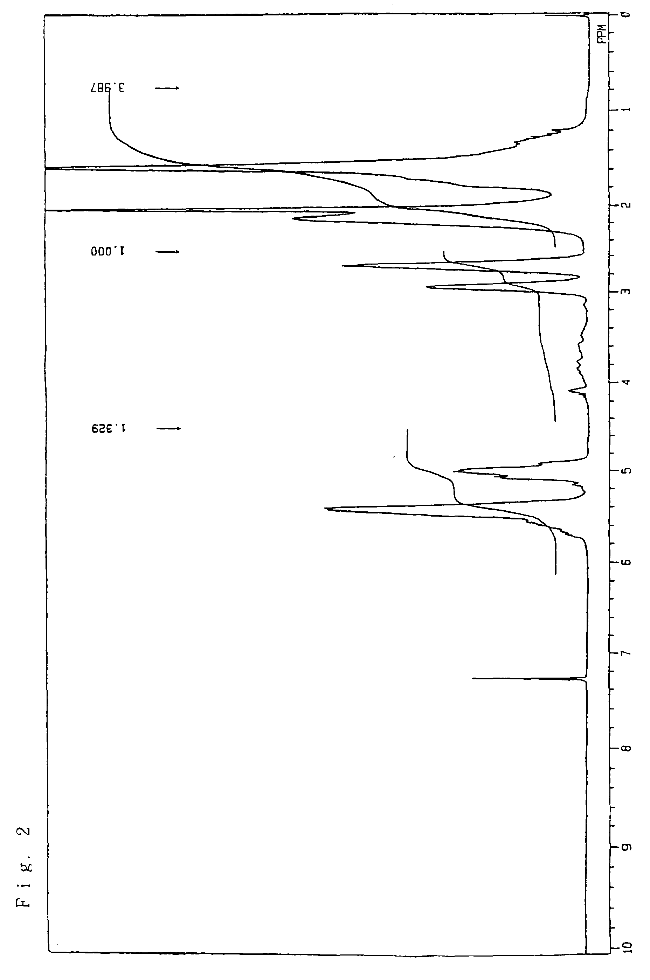

The procedure for epoxidation described in Example 1 was repeated except that there were used, as starting materials, polybutadiene having a terminal hydroxyl group (number-average molecular weight = 5,000; the amount of 1,4-linkages = 81% and that of 1,2-bonds = 19% of all double bonds; tradename "R-45HT," manufactured by Idemitsu Petrochemical Co., Ltd.) and 414 g of a solution of 29.0% peracetic acid in ethyl acetate, to thereby obtain an epoxidized polybutadiene having an oxirane oxygen content of 8.3%. Physicochemical properties of the product are shown in Table-2. Also, the $^1$H-NMR chart is shown in Fig. 2.

10

[Example 3]

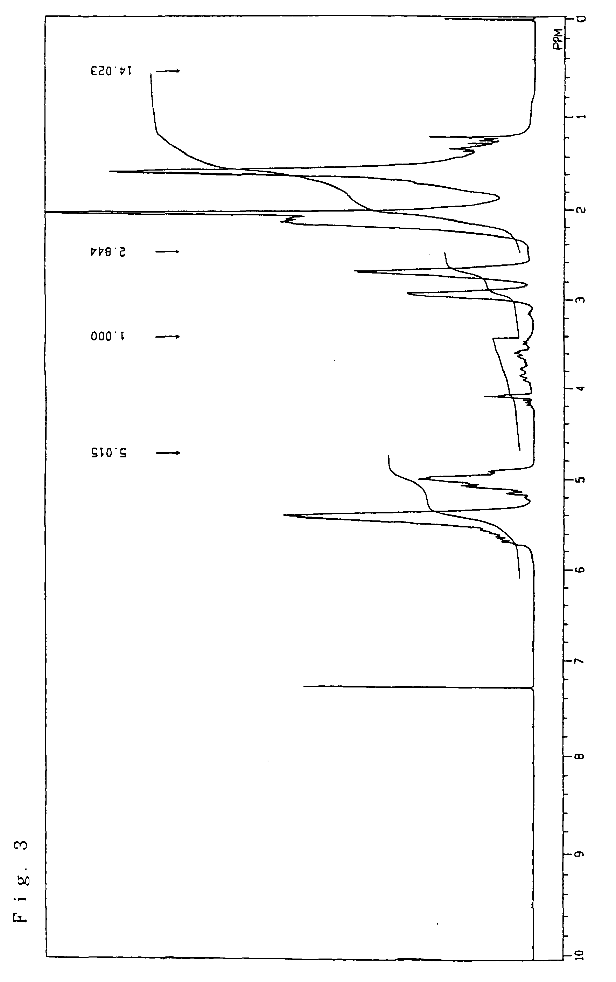

The procedure for epoxidation described in Example 1 was repeated except that there were used, as starting materials, polybutadiene having a terminal hydroxyl group (number-average molecular weight = 2,000; the amount of 1,4-linkages = 79% and that of 1,2-bonds = 21% of all double bonds; tradename "R-15HT," manufactured by Idemitsu Petrochemical Co., Ltd.) and 518 g of a solution of 29.0% peracetic acid in ethyl acetate, to thereby obtain an epoxidized polybutadiene having an oxirane oxygen content of 7.1%. Physicochemical properties of the product are shown in Table-2. Also, the $^1$H-NMR chart is shown in Fig. 3.

[Example 4]

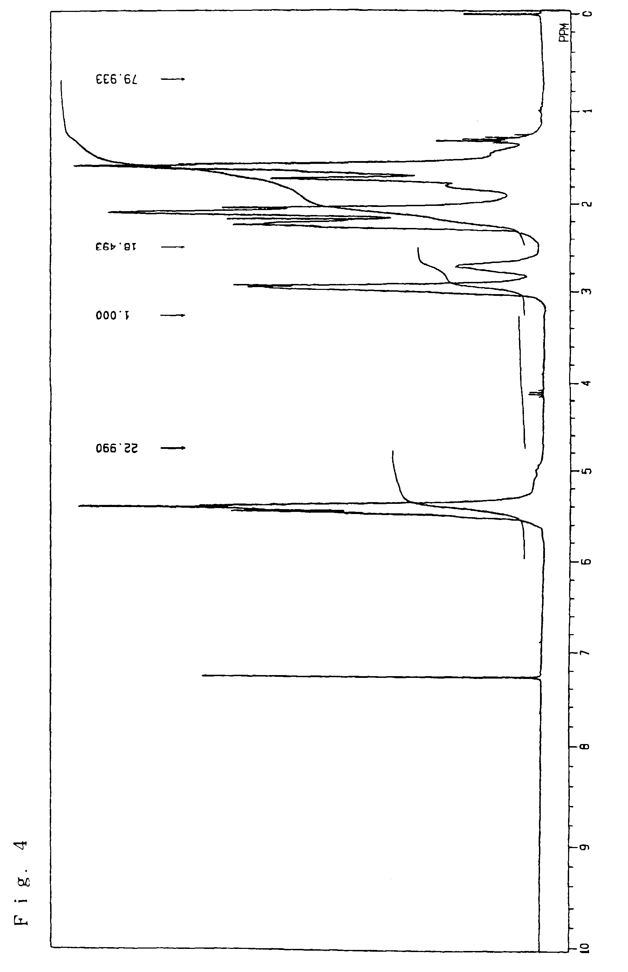

The procedure for epoxidation described in Example 1 was repeated except that the amount of the solution of 29.0% peracetic acid in ethyl acetate was 518 g, to thereby obtain an epoxidized polybutadiene having an oxirane oxygen content of 9.1%. Physicochemical properties of the product are shown in Table-2. Also, the $^1$H-NMR chart is shown in Fig. 4.

[Example 5]

A 1,000-ml four-necked, round-bottomed flask equipped with a thermometer, a stirrer, and a reflux condenser was charged with 250 g of the same type of polybutadiene as used in Example 1 and a solvent mixture containing ethyl acetate (125 g), acetic acid (180 g) and 95% sulfuric acid (10.4 g). The contents were mixed and heated to 50°C. Hydrogen peroxide water (purity 60%, 340 g) was added dropwise by use of a dropping funnel, to cause a reaction for about three hours. Subsequently, the reaction mixture was aged for three hours at 50°C. After completion of ageing, the reaction mixture was washed with water in twice an amount of the mixture (on a weight basis) three times, to thereby remove sulfuric acid and acetic acid originating from peracetic acid. Subsequently, volatile components such as small amounts of water, ethyl acetate, etc. were removed through concentration under reduced pressure. The resultant product was an epoxidized polybutadiene having an oxirane oxygen content of 8.5%. Physicochemical properties of the product are shown in Table-2.

[Example 6]

A 1,000-ml four-necked, round-bottomed flask equipped with a thermometer, a stirrer, and a reflux condenser was charged with 250 g of the same type of polybutadiene as used in Example 2 and a solvent mixture containing ethyl acetate (125 g), acetic acid (150 g) and 95% sulfuric acid (8.7 g), and the contents were mixed. Hydrogen peroxide water (purity 60%, 283 g) was added dropwise by use of a dropping funnel, to cause a reaction for about three hours. Subsequently, the reaction mixture was aged for three hours at 50°C. After completion of ageing, the reaction mixture was washed with water in twice an amount of the reaction mixture (on a weight basis) four times, to thereby remove acetic acid originating from peracetic acid.
Subsequently, volatile components such as small amounts of water and ethyl acetate were removed through concentration under reduced pressure. The resultant product was an epoxidized polybutadiene having an oxirane oxygen content of 7.3%. Physicochemical properties of the product are shown in Table-2.

[Comparative Example 1]

The procedure for epoxidation described in Example 1 was repeated except that the amount of the solution of 29.0% peracetic acid in ethyl acetate was 390 g, to thereby obtain an epoxidized polybutadiene having an oxirane oxygen content of 8.2%. Physicochemical properties of the product are shown in Table-2.

[Comparative Example 2]

The procedure for epoxidation described in Example 1 was repeated except that the amount of the solution of 29.0% peracetic acid in ethyl acetate was 296 g, to thereby obtain an epoxidized polybutadiene having an oxirane oxygen content of 6.8%. Physicochemical properties of the product are shown in Table-2.

TABLE-2

| STARTING MATERIAL PB([*2]) | OX-O (%) ([*3]) | a[*4] | b | c | d | e | f | g | x[*5] |
|---|---|---|---|---|---|---|---|---|---|
| PB in Ex. 1 | - | 67.2 | - | 0.9 | 32.8 | - | - | - | - |
| Ex. 1 | 10.6 | 67.5 | 0.5 | 0.5 | 12.5 | ([*6]) | 4.4 | 14.6 | 19.5 |
| PB in Ex. 2 | - | 62.2 | 2.2 | 6.7 | 28.9 | - | - | - | - |
| Ex. 2 | 8.3 | 63.1 | 2.1 | 6.8 | 14.4 | ([*6]) | 8.5 | 5.1 | 15.7 |
| PB in Ex. 3 | - | 62.3 | 3.9 | 7.0 | 26.8 | - | - | - | - |
| Ex. 3 | 7.1 | 61.0 | 5.0 | 6.6 | 15.4 | - | 7.0 | 5.0 | 17.0 |
| Ex. 4 | 9.1 | 65.3 | 0.8 | 1.3 | 17.6 | - | 4.0 | 11.0 | 15.8 |
| Ex. 5 | 8.5 | 64.9 | 1.8 | 0.8 | 18.4 | - | 3.6 | 10.5 | 15.9 |
| Ex. 6 | 7.3 | 62.2 | 4.1 | 6.7 | 14.9 | - | 7.3 | 4.8 | 16.2 |
| Comp. Ex. 1 | 8.2 | 66.2 | 0.0 | 0.9 | 18.9 | - | 4.1 | 9.9 | 14.0 |
| Comp. Ex. 2 | 6.8 | 66.5 | 0.0 | 0.9 | 20.5 | - | 3.7 | 7.4 | 11.1 |

[NOTES]
*2: PB means polybutadiene.
*3: OX-O means oxirane oxygen.
*4: a, b, c, d, e, f, and g respectively correspond to the structures of epoxidized polybutadiene as shown above.
*5: X shows a total (%) of $b + f + g$.
*6: In Examples 1 and 2, double bonds resulting from 1,2-linkages were excluded from calculation of the ratio to the hydroxyl groups, for the reason that substantially no double bonds resulting from 1,2-linkages were considered to have been epoxidized, from the fact that the peak position attributed to epoxide group (e) having double bonds resulting from 1,2-linkages was not completely separated from the peak position shown in 7(a) of Table-1, and that the integral value of signals assignable to double bonds resulting from 1,2-linkages in the $^1$H-NMR spectrum scarcely changed.

[Example 7]

The six different types of the epoxidized polybutadienes obtained in Examples 1 through 4 and Comparative Examples 1 and 2 were tested for compatibility with epoxy resins.

The starting resins employed were (1) epoxidized polybutadiene; i.e., six different types of the epoxidized polybutadienes obtained in Examples 1 through 4 and Comparative Examples 1 and 2; and (2) epoxy resins; i.e., Epicoat 1009 of a bisphenol A-type (manufactured by Yuka Shell Co., Ltd.) and "Araldite AER-5009" (manufactured by Asahi-Chiba Co., Ltd.), and "Araldite ECN-1273" of a cresol-novolak type.

The test for compatibility was performed as follows. Epoxidized polybutadiene, a solvent (butyl carbitol), and an epoxy resin were mixed at proportions by weight of 50:50:140. The mixture was applied onto a glass plate and dried at room temperature. One week thereafter, the glass plate applied was visually observed and evaluated. Evaluation results are indicated by "O" for tansparency and "X" for opaque or white cloud. The evaluation results are shown in Table-3.

TABLE-3

| RESIN NO. | EPICOAT 1009 | ARALDITE AER-5009 | ARALDITE ECN-1273 |
|---|---|---|---|
| Ex. 1 | O | O | O |
| Ex. 2 | O | O | X |
| Ex. 3 | O | O | X |
| Ex. 4 | O | O | X |
| Comp. Ex. 1 | X | X | X |
| Comp. Ex. 2 | X | X | X |

(Results)

From Table-2 and Table-3, the epoxidized polybutadienes of the Examples in which the value x, i.e., the total of b+f+g , was higher than 15.5% provided transparent coating films on the glass plates, proving excellent compatibility with epoxy resins.

[Example 8]

The materials used were a bisphenol A-type epoxy resin (manufactured by Yuka Shell Co., Ltd.; tradename "Epicoat 1009"; epoxy equivalent amount = 1860), an epoxidized polybutadiene (manufactured by Daicel Chemical Industries, Ltd.; tradename "Epolead PB3600"; epoxy equivalent = 200; oxirane oxygen content = 8% by weight; a product obtained through epoxidation of liquid polybutadiene in which double bonds resulting from 1,4-linkages account for at least 50% of all double bonds), and, as a curing agent, a phenol resin manufactured by Gun'ei Kagaku Kogyo K.K. (tradename "PS-2980"; number-average molecular weight = 606). The proportions of "Epicoat 1009" and "PS-2980" were determined so that the ratio (phenolic OH equivalent)/(epoxy equivalent) was 0.5.

The resultant resin was dissolved in a dilution solvent containing ethylene diglycol acetate, 2-ethoxyethyl acetate, and butyl alcohol (3:3:4 on a weight basis) and adjusted the solid content to 50%. Aluminum isopropoxide, which served as a curing catalyst, was added thereto in an amount of 1 part by weight with respect to 100 parts by weight the solid resin content.

The resultant solution of the epoxy resin composition was applied onto a substrate material (SPTE (galvanised steel sheet); 50 x 150 x 0.3 mm) by use of a bar coater (diameter of wire: 0.30 mm). Subsequently, the coated material was cured in a 200°C oven for 10 minutes. The epoxy resin composition and the cured product thereof were subjected to a compatibility test, evaluation of appearance of the cured product, a rubbing test, a pencil hardness test, an impact test, and a bending resistance test (T-bend test). The results are shown in Table-4. The blending proportions shown in Table-4 indicate % by weight of epoxidized polyene in the epoxy resin.

[Example 9]

The procedure described in Example 8 was repeated, except that the epoxidized polybutadiene was replaced by "Epolead PB4700" (tradename, manufactured by Daicel Chemical Industries, Ltd.; epoxy equivalent = 168; oxirane oxygen content = 9.5% by weight; number-average molecular weight = 3,300), which is an epoxidized product of liquid polybutadiene in which double bonds resulting from 1,4-linkages account for at least 50% of all double bonds.

[Example 10]

The procedure described in Example 8 was repeated, except that the epoxidized polybutadiene employed was "Epolead PB4700" (tradename, manufactured by Daicel Chemical Industries, Ltd.) and that the amount of epoxy resin was changed as indicated in Table-4.

[Example 11]

The materials used were a bisphenol A-type epoxy resin (manufactured by Yuka Shell Co., Ltd.; tradename "Epicoat 1009"), an epoxidized polybutadiene (manufactured by Daicel Chemical Industries, Ltd.; tradename "Epolead PB4700"), and, as a curing agent, a phenol resin manufactured by Gun'ei Kagaku Kogyo K.K. (tradename "PS-2980"). The curing agent was added in an amount to cause the ratio (phenolic OH equivalent)/(epoxy equivalent) = 1.

The resultant resin was dissolved in a dilution solvent containing ethylene diglycol acetate, 2-ethoxyethyl acetate, and butyl alcohol (3:3:4 on a weight basis), and the solid content was adjusted to 50%. Aluminum isopropoxide, which served as a curing catalyst, was added thereto in an amount of 1 part by weight with respect to 100 parts by weight the solid resin content.

[Comparative Example 3]

The procedure described in Example 11 was repeated, except that the epoxidized polybutadiene employed was "BF-1000" (tradename, manufactured by Asahi Denka Kogyo K.K.; epoxy equivalent = 210; oxirane oxygen content = 7.6% by weight; a product obtained through epoxidation of liquid polybutadiene in which 1,2-bonds account for at least 50% of all double bonds; number-average molecular weight: 2,200).

[Comparative Example 4]

The procedure described in Example 11 was repeated, except that the epoxidized polybutadiene employed was "E-1000-8.0" (tradename, manufactured by Nippon Petrochemical Co., Ltd.; epoxy equivalent = 212; oxirane oxygen content = 7.5% by weight; a product obtained through epoxidation of liquid polybutadiene in which 1,2-bonds account for at least 50% of all double bonds; number-average molecular weight: 1,800).

[Comparative Example 5]

The procedure described in Example 8 was repeated, except that the epoxy resin employed was "Epicoat 1009" (tradename, manufactured by Yuka Shell Co., Ltd.) and its amount was as indicated in Table-4.

[Comparative Example 6]

The procedure described in Example 8 was repeated, except that the epoxidized polybutadiene employed was "Epolead PB4700" (tradename, manufactured by Daicel Chemical Industries, Ltd.) and its amount was as indicated in Table-4.

[Comparative Example 7]

The procedure described in Example 8 was repeated, except that the epoxidized polybutadiene employed was "Epolead PB3600" (tradename, manufactured by Daicel Chemical Industries, Ltd.) and its amount was as indicated in Table-4.

[Comparative Example 8]

The procedure described in Example 8 was repeated, except that the epoxidized polybutadiene employed was "E-1000-8.0" (tradename, manufactured by Nippon Petrochemical Co., Ltd.) and its amount was as indicated in Table-4.

(Methods for testing properties of cured products)

Compatibility: The test substance was applied onto a glass plate and dried at room temperature. One week thereafter, the glass plate applied was visually observed. "O" indicates transparency and "X" indicates opaque.
Appearance of the cured product: The appearance of the coating film after cured was visually observed and evaluated.
Rubbing test: Xylene/100 times of rubbing. "O" indicates no scratch, "△" indicates a small number of scratches, and "X" indicates the state in which the entirety of the rubbed portions turned to opaque.
Pencil hardness test: Measured in accordance with JIS K5400.
Impact test: Measured in accordance with JIS K 5400 by use of a Dupont impact deformation tester. The unit in Table-4 is cm.
Bending resistance test: Measured in accordance with ASTM-D4145-83.

TABLE-4

| | MIXING RATIO | COMPATI-BILITY | APPEERENCE OF CURED PRODUCT | RUBBING TEST | PENCIL HARDNESS | IMPACT TEST | BEND RESISTANCE TEST |
|---|---|---|---|---|---|---|---|
| Ex. 8 | 50 | O | Transparent | O | H | 45 | 1T |
| Ex. 9 | 50 | O | Transparent | O | 2H | 45 | 0T |
| Ex. 10 | 35 | O | Transparent | O | H | 45 | 0T |
| Ex. 11 | 50 | O | Transparent | O | H | 50 | 0T |
| Comp. Ex. 3 | 50 | X | Opaque | X | H | 30 | 4T |
| Comp. Ex. 4 | 50 | X | Transparent | X | H | 40 | 4T≥ |

TABLE-4 (continued)

| | MIXING RATIO | COMPATI- BILITY | APPEARENCE OF CURED PRODUCT | RUBBING TEST | PENCIL HARDNESS | IMPACT TEST | BEND RESIST- ANCE TEST |
|---|---|---|---|---|---|---|---|
| Comp. Ex. 5 | 0 | O | Transparent | O | H | 30 | 2T |
| Comp. Ex. 6 | 75 | O | Transparent | O | 3H | 30 | 4T≥ |
| Comp. Ex. 7 | 12.5 | O | Transparent | O | H | 25 | 3T≥ |
| Comp. Ex. 8 | 50 | X | Transparent | X | H | 40 | 4T≥ |

[Synthesis Example 1]

A 15-liter glass reactor equipped with a thermometer, a stirrer, and a reflux condenser was charged with 2,000 g of DCPD (manufactured by Nippon Zeon Co., Ltd.), a solvent, ethyl acetate (1,000 g), and potassium propionate (1.0 g). The contents were mixed well, and heated to 40°C. A solution (7,665 g) of 30% peracetic acid in ethyl acetate was added thereto for about four hours by use of a dropping funnel, and the resultant mixture was aged at 40°C for one hour.

After completion of ageing, the reaction mixture was washed with water in twice an amount of the reaction mixture five times, to thereby remove acetic acid originating from peracetic acid.

The E-DCPD ethyl acetate solution after washed with water was desolvented under reduced pressure, to thereby obtain 1,380 g of E-DCPD. Epoxidation was confirmed by $^1$H-NMR wherein peaks attributed to double bonds disappeared.

[Example 12]

The E-DCPD prepared from Synthesis Example 1, a carboxy-containing polyester resin ("P-2400" manufactured by Chiba-Geigy Co., Ltd.), titanium dioxide, and a fluidity regulator ("Modaflow" manufactured by Monsanto Co., Ltd.) were blended as shown in Table-5. The mixture was kneaded by use of an extruder, cooled, pulverized, and classified to thereby obtain a powder coating material. Galvanized sheet iron was coated with the thus-obtained powder coating material by use of an electrostatic coater, followed by baking at 180°C for 20 minutes and evaluation of the coating film. The results are shown in Table-5.

[Example 13 and Comparative Examples 9 and 10]

The procedure of Example 12 was repeated except that the material proportions were changed as shown in Table-5, to thereby obtain powder coating materials. After the powder coating materials were subjected to coating and baking, the resultant coating films were evaluated. The results are shown in Table-5.

As a result, the products obtained from Examples 12 and 13 and Comparative Examples 9 and 10 exhibited satisfactory coating film properties. However, the products obtained from Comparative Examples 9 and 10—which contained TGIC—induced rashes to the exposed portions of the skin. In contrast, the powder coating materials which contained the E-DPCD of the present invention induced no rash.

The coating films were tested and evaluated as described below.

(1) Pencil hardness test: The test pieces were pencil-scratched in accordance with the pencil scratching test described in JIS K5400-1991 8.4.2, and the scratch marks were evaluated.

(2) Cross-cut adhesion tape: Incisions at intervals of 1 mm were formed in the surface of the test piece in accordance with the cross-cut adhesion test described in JIS K5400-1991 8.5.2. A Cellophane adhesive tape was applied thereto, and subsequently removed. This operation was repeated two times. Adhesion was evaluated from the extent of exfoliated coating film.

(3) Erichsen test (mm): The method described in JIS K5400-1991 8.2.1 was followed. Namely, a hard ball was pressed against the backside of a test piece so as to cause deformation of the test piece, and the distance to the point at which the coating film generated cracks and exfoliation was obtained.

(4) Impact resistance (cm): A test piece was placed in an atmosphere of 23°C, and an impact test was performed with a drop weight having a diameter of 1/2Φ. The test piece was placed with the coated surface facing upward, and the weight (1 kg) was allowed to fall from different positions in height. The maximum height at which no breakage occurred was obtained.

(5) Conditions of the coating film were visually judged after 100 repetitions of a rubbing test. The criteria of judg-

15

ment were as follows: "O" - Good, "△" - slightly poor, and "X" - poor.

(6) Gloss (60°): In accordance with the method described in JIS K5400-1991 7.6, a 60° mirror surface was irradiated with light, and the reflectance (%) was measured under conditions in which the angle of incidence and the light-receiving angle were 60°.

(7) Surface conditions: The conditions of the coating film were visually judged.

(8) Presence and absence of induced rashes

Products which induced rashes in exposed portions of the skin during the coating operation are indicated by "yes," and products which did not are indicated by "no."

TABLE-5                                               (part by weight)

| | EXAMPLE 12 | EXAMPLE 13 | COMPARATIVE EXAMPLE 9 | COMPARATIVE EXAMPLE 10 |
|---|---|---|---|---|
| TGIC | | | 10 | 15 |
| E-DCPD | 10 | 15 | | |
| P-2400 | 227.8 | | 132.8 | |
| P-4800 | | 395 | | 285 |
| TiO$_2$ | 30 | 30 | 30 | 30 |
| Modaflow | 0.5 | 0.5 | 0.5 | 0.5 |
| Pencil Hardness | 2H | 2H | 2H | 3H |
| Cross-cut Adhesion Test | 100/100 | 100/100 | 100/100 | 100/100 |
| Erichsen Value | 7mm or more | 7mm or more | 7mm or more | 7mm or more |
| Impact Resistance (cm) | 45 | 40 | 40 | 50 |
| Rubbing Test | O | O | O | O |
| Gloss (60°C) | 91 | 95 | 93 | 97 |
| Surface Conditions | Smooth | Smooth | Smooth | Smooth |
| Rash | no | no | yes | yes |

Industrial Applicability

The first aspect of the present invention exerts the below-described, particularly advantageous effects, proving that the invention is very useful in the industry:

1. The epoxidized polyene of the present invention, due to the presence of a predetermined amount of a combination of hydroxyl groups and epoxy groups, or a predetermined amount of epoxy groups, exhibits excellent compatibility with epoxy resins.

2. Conventionally, highly epoxidized polyenes were used for the purpose of improving compatibility with epoxy resins. However, resultant products obtained therefrom were unstable, raising problems during use. In contrast, the epoxidized polyene of the present invention provides stable products, and therefore, it does not raise any problem during use.

The second aspect of the present invention provides coating film having impact resistance and bending resistance when formed on metallic surfaces, etc. The film is formed through use of a specified epoxidized polyene, a bisphenol type epoxy resin, and a curing agent. Due to the excellent compatibility between the epoxidized polyene and the bisphenol type epoxy resin, the cured product is imparted with excellent appearance. In addition, work efficiency can be improved.

According to the third aspect of the present invention, there are provided compositions and powder coating materials which provide excellent chemical resistance, corrosion resistance, heat resistance, weather resistance, gloss, etc. The E-DCPD which is used in the present invention has no irritation to the skin. Moreover, when the E-DCPD is blended with a specified compound having a carboxyl group, there are obtained compositions and powder coating materials which exhibit excellent weather resistance and gloss and which have no irritation to the skin.

## Claims

1. An epoxidized polyene having epoxy groups alone or a combination of epoxy groups and hydroxyl groups, characterized in that, in the $^1$H-NMR spectrum, the sum of integrated values of signals within the range of 1-6 ppm that are assignable to hydrogen atoms on the carbon atoms to which epoxy groups or hydroxyl groups are bonded accounts for 15.5-20.0% of the total integrated value of all the proton signals.

2. The epoxidized polyene according to Claim 1, characterized in that the epoxidized polyene is an epoxidized product of polybutadiene, polyisoprene, or a copolymer of a compound having a butadiene or isoprene moiety in the molecule.

3. The epoxidized polyene according to Claim 2, characterized in that the epoxidized polyene is an epoxidized product of polybutadiene and has a molecular weight of 500-50,000.

4. The epoxidized polyene according to Claim 1 or 2, characterized in that the internal structure of polyene which serves as a starting material of the epoxidized polyene is such that double bonds resulting from 1,4-linkages account for 50% or more of all double bonds.

5. The epoxidized polyene according to any one of Claims 1 through 4, characterized in that the epoxidized polyene is obtained through epoxidation of a starting material polyene by use of an organic peracid.

6. An epoxy resin composition characterized by comprising a mixture of 20-60% by weight of an epoxidized polyene which has an oxirane oxygen content of 6.5-13% by weight and which is prepared by epoxidizing a liquid poly-1,3-diene in which double bonds resulting from 1,4-linkages account for at least 50% of all double bonds and which liquid poly-1,3-diene has a number-average molecular weight of 1,000-30,000 and 80-40% by weight of an epoxy resin other than epoxidized polyenes (the total amount of both being 100% by weight); and a phenol resin which serves as a curing agent.

7. An epoxy resin composition comprising a mixture of 20-60% by weight of an epoxidized polyene which has an oxirane oxygen content of 6.5-13% by weight and which is prepared by epoxidizing a liquid poly-1,3-diene in which double bonds resulting from 1,4-linkages account for at least 50% of all double bonds and which liquid poly-1,3-diene has a number-average molecular weight of 1,000-30,000 and 80-40% by weight of an epoxy resin other than epoxidized polyenes (the total amount of both being 100% by weight), a phenol resin which serves as a curing agent, and a curing catalyst.

8. The epoxy resin composition according to Claim 6 or 7, in which the epoxy resin other than epoxidized polyenes is at least one member selected from among bisphenol type epoxy resins.

9. The epoxy resin composition according to any one of Claims 6 through 8, chabracterized in that the epoxidized polyene is prepared by epoxidizing the carbon-carbon double bonds of the liquid poly-1,3-diene through use of an organic peracid.

10. A cured product of an epoxy resin composition described in any one of Claims 6 through 9, characterized in that the cured product is obtained by curing the epoxy resin composition by the application of heat.

11. A composition comprising diepoxidized dicyclopentadiene and a compound having two or more carboxyl groups in the molecule.

12. The composition according to Claim 11, characterized in that the compound having two or more carboxyl groups in the molecule is represented by the following formula:

$$R(COOH)_n \qquad\qquad (1)$$

wherein R, having a valence of n, is a linear or branched C2-C25 aliphatic hydrocarbon group, aromatic hydrocarbon group, alicyclic hydrocarbon group, or heterocycle-containing group, and n is an integer between 2 and 5 inclusive).

13. A composition comprising diepoxidized dicyclopentadiene and a carboxy-containing polyester resin.

14. The composition according to Claim 13, characterized in that the carboxy-containing polyester resin has an acid value of 15-200 mgKOH/g, a softening point of 70-160°C, and a number-average molecular weight of 500-20,000.

15. The composition according to any one of Claims 11 through 14, characterized in that the equivalent ratio of epoxy groups (EPOXY) to carboxyl groups (-COOH) ; i.e., EPOXY/-COOH, is 0.5-2.0.

16. A powder coating material comprising a composition described in any one of Claims 11 through 15.

Fig. 1

Fig. 2

EP 0 845 486 A1

Fig. 3

EP 0 845 486 A1

Fig. 4

EP 0 845 486 A1

## INTERNATIONAL SEARCH REPORT

| | International application No. |
|---|---|
| | PCT/JP97/02051 |

**A.   CLASSIFICATION OF SUBJECT MATTER**

Int. Cl$^6$  C08G59/34, C08L63/00, C09D163/00, C09D5/03, C08F8/08

According to International Patent Classification (IPC) or to both national classification and IPC

**B.   FIELDS SEARCHED**

Minimum documentation searched (classification system followed by classification symbols)

Int. Cl$^6$  C08G59/20-34, C08L63/00-10, C09D163/00-10, C09D5/03, C08F8/06-08

Documentation searched other than minimum documentation to the extent that such documents are included in the fields searched

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X | JP, 2-115217, A (Tosoh Corp.), April 27, 1990 (27. 04. 90), Claim; page 3, upper right column, lines 5 to 19 (Family: none) | 11 - 12 |
| A | JP, 59-117524, A (Hitachi Chemical Co., Ltd.), July 6, 1984 (06. 07. 84), Claim (Family: none) | 1 - 10 |
| A | JP, 7-10921, A (Daicel Chemical Industries, Ltd.), January 13, 1995 (13. 01. 95), Claim (Family: none) | 1 - 10 |

☐   Further documents are listed in the continuation of Box C.      ☐   See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier document but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| September 11, 1997 (11. 09. 97) | September 24, 1997 (24. 09. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)